# FASCICULE DE BREVET EUROPEEN

(11) **EP 2 206 384 B1**
(45) Date de publication et mention de la délivrance du brevet: **07.12.2011**
(21) Numéro de dépôt: 08843359.4
(22) Date de dépôt: 24.10.2008
(51) Int. Cl.: H04W 36/08

(54) **PROCEDE DE COMMUTATION DE NOEUD D'ACCES**
ZUGANGSKNOTEN-UMSCHALTVERFAHREN
ACCESS NODE SWITCHING METHOD

(30) Priorité: 26.10.2007 FR 0758634
(43) Date de publication de la demande: 14.07.2010
(73) Titulaire: FRANCE TELECOM, 75015 Paris (FR)
(72) Inventeur: HERBELIN, Philippe, F-94100 Vincennes (FR); DAOUD TRIKI, Khadija, F-92130 Issy les Moulineaux (FR); PONS, Jérôme, F-75011 Paris (FR)
(74) Mandataire: Jeune, Pascale
(86) Numéro de dépôt international: PCT/FR2008/051926
(87) Numéro de publication internationale: WO 2009/056749

(56) Documents cités:
- EP-A- 1 622 315
- WO-A-03/092314
- WO-A-2005/084146
- US-A1- 2003 204 599
- US-A1- 2004 148 352
- US-A1- 2006 068 789
- LIEBSCH M ET AL: "Candidate Access Router Discovery (CARD); rfc4066.txt" IETF STANDARD, INTERNET ENGINEERING TASK FORCE, IETF, CH, 1 juillet 2005 (2005-07-01), XP015041933 ISSN: 0000-0003
- SOHYUN KIM ET AL: "Overall HO procedures for IEEE 802.16" IEEE C802.16E-03/47, XX, XX, 4 septembre 2003 (2003-09-04), pages 1-15, XP002334169
- LOUGHNEY J ET AL: "Context Transfer Protocol (CXTP); rfc4067.txt" IETF STANDARD, INTERNET ENGINEERING TASK FORCE, IETF, CH, 1 juillet 2005 (2005-07-01), XP015041932 ISSN: 0000-0003

## Description

Le domaine de l'invention est celui des télécommunications et plus précisément celui des réseaux de radiocommunication mobile.

Plus particulièrement, l'invention concerne la commutation de noeud d'accès d'un terminal en cours de mise en oeuvre d'un ou plusieurs service(s) avec une ou plusieurs entité(s) communicante(s) distantes à travers un réseau à commutation de paquet. Initialement, le terminal est connecté à un noeud d'accès origine et associé à un contexte de communication courant contenant des informations relatives à des couches d'un modèle de communication, qui sont requises pour la mise en oeuvre de chaque service considéré avec une entité communicante. Du fait de sa mobilité, le terminal peut être amené à commuter du noeud d'accès origine vers un noeud d'accès destinataire.

On notera que les noeuds d'accès origine et destinataire, peuvent appartenir à un même réseau d'accès ou bien à des réseaux d'accès distincts. Il peut s'agir de réseaux d'accès de réseaux mobiles cellulaires, par exemple de type UMTS (pour "Universal Mobile Telecommunications System" en anglais), ou sans fil, par exemple de type WIMAX (pour "Worldwide Interoperability for Microwave Access" en anglais) ou encore filaires, par exemple FTTH (pour "Fiber To The Home" en anglais). En toute hypothèse, ce(s) réseau(x) d'accès sont connectés au réseau à commutation de paquets, par exemple un réseau type IP ("Internet Protocol" en anglais), supportant le service utilisé par le terminal. D'autre part, le terminal est indifféremment mono-technologie, multi technologies ou mono-technologie reconfigurable

L'entité communicante distante avec laquelle le terminal met en oeuvre le service considéré peut être un autre terminal d'utilisateur ou bien un serveur distant. Dans le premier cas, le service mis en oeuvre par les deux terminaux peut être un service de téléphonie sur IP, un service de messagerie instantanée, etc. Dans le second cas, le serveur distant peut fournir le service utilisé par le terminal.

Les paquets échangés entre le terminal et l'entité communicante distante empruntent un chemin comprenant des noeuds intermédiaires. En cas de commutation du terminal d'un noeud d'accès origine vers un noeud d'accès destinataire ("handover" en anglais), ce chemin est modifié.

Le modèle OSI, normalisé par l'ISO (Organisation Internationale de Normalisation), est un modèle de communication permettant de gérer le transfert des données au moyen de sept couches superposées: la couche physique (couche 1), la couche liaison de données (couche 2), la couche réseau (couche 3), la couche transport (couche 4), la couche session (couche 5), la couche présentation (couche 6) et la couche application (couche 7). Les différents noeuds des réseaux de télécommunications intègrent tout ou partie de ces couches. Le terminal quant à lui possède les sept couches du modèle OSI. Les trois premières couches, dites couches basses, sont relatives à la mise en oeuvre de la connexion et au transport des données et en principe transparente vis-à-vis du type de données transportées. Les quatre couches suivantes, dites couches hautes, sont responsables du traitement des données permettant d'offrir le service offert par le réseau.

Il existe d'autres modèles de communication utilisant des couches, notamment un modèle IETF ("Internet Engineering Task Force") à cinq couches.

Par définition, un contexte de communication comprend l'ensemble des informations requises pour la mise en oeuvre d'un service et relatives à toutes les couches du modèle de communication utilisé, le contexte de transport étant relatif aux couches basses et le contexte applicatif étant relatif aux couches hautes.

Un sous ensemble de paramètres du contexte applicatif définit une configuration applicative donnée pour le service en cours entre le terminal et l'entité communicante distante. Ces paramètres sont par exemple le type de service, le débit, le type de codeur/décodeur activé pour le service considéré mis en oeuvre au travers du noeud d'accès origine.

Dans les couches basses, les protocoles sont échangés entre les noeuds intermédiaires voisins, alors que dans les couches hautes les protocoles sont échangés entre le terminal et l'entité communicante qui peuvent être séparés par de nombreux noeuds intermédiaires. Les couches basses sont ainsi chaînées le long du chemin entre le terminal et l'entité communicante distante au travers des noeuds intermédiaires alors que les couches hautes sont de bout en bout.

Dans un système basé sur le modèle OSI, le noeud d'accès à un réseau d'accès possède la couche physique, la couche liaison de données et la couche réseau. Le noeud d'accès est par exemple une station de base d'un réseau UMTS, HSDPA ou encore LTE ("Node B" ou "Evolved node B" en anglais), ou bien un point d'accès d'un réseau WIMAX ("Access point" en anglais).

Les noeuds intermédiaires, en amont du réseau de télécommunication à commutation de paquet, possèdent toute ou partie des couches basses.

Dans le cas d'un réseau UMTS, les noeuds intermédiaires sont par exemple successivement un contrôleur de station de base RNC (pour "radio network Controler"' en anglais), une passerelle SGSN (pour "Serving GPRS Support Node" en anglais), une passerelle GGSN (pour "Gateway GPRS Support Node" en anglais) qui maintiennent un contexte de communication lié au mobile et à ses applications encours. Dans les évolutions du réseau UMTS, les fonctionnalités du contrôleur sont réparties entre les stations de base et les passerelles qui constituent les noeuds intermédiaires, dénommées passerelle SAE et passerelle PDN.

Dans le cas de réseaux sans fil de type WIMAX, les noeuds intermédiaires possèdent en général les trois premières couches du modèle OSI. Ce sont par exemple les passerelles AGW et des routeurs implémentant le protocole MIP de couche réseau MIP ("Mobile Internet Protocol").

Les procédures génériques de commutation de noeud d'accès, comprennent une étape de décision de commutation de noeud d'accès, une étape d'attachement du terminal au noeud d'accès destinataire par l'établissement d'un lien sur la couche liaison de données et une étape de détermination et de mise à jour par les équipements du réseau associé à ce noeud d'accès destinataire du chemin reliant le terminal et le noeud de service au travers de ce nouveau noeud d'accès.

La gestion du changement de noeud d'accès est généralement réalisée par la mise en oeuvre de tunnels au niveau de la couche réseau, par exemple via les protocoles GTP ("GPRS Tunneling Protocol" en anglais) ou MIP ("Mobile Internet Protocol", en anglais). L'utilisation des tunnels permet de mettre à jour le chemin vers le terminal à partir d'un point ancre dans le réseau et de rendre transparent le changement de noeud d'accès vis-à-vis de l'entité communicante distante qui peut ainsi utiliser la même information de couche réseau, par exemple l'adresse IP du terminal mobile ayant servi à l'établissement de la communication. La mise en place et le maintien des tunnels et des contextes liés au mobile sont cependant très consommateurs en ressources mémoire dans les noeuds intermédiaires.

Si plusieurs services sont en cours avec une pluralité d'entités communicantes, l'ensemble des liens entre le terminal et le noeud d'accès origine sont commutés vers le noeud destinataire.

Afin de limiter la mise en oeuvre de tunnels, une solution connue repose sur l'utilisation de protocoles au niveau de la couche transport, par exemple le protocole SCTP ("Stream Control Transmission Protocol"), ou au niveau de la couche session, par exemple le protocole SIP ("Session Initiation Protocol"), qui implémentent des messages de signalisation permettant d'informer d'un changement d'adresse IP du terminal mobile. L'utilisation de tels protocoles, d'une part, augmente la quantité des échanges de signalisation et, d'autre part, introduit des temps de latence impactant la qualité de service de la communication, notamment pour des services temps réels. Ils ne constituent donc pas une solution satisfaisante pour la procédure de commutation de noeud d'accès.

L'introduction d'une étape d'anticipation de commutation de noeud d'accès avec prédétermination, le cas échéant, d'une nouvelle adresse IP relative à la connexion au noeud d'accès destinataire est envisagé dans l'article intitulé "Link Layer Assisted Mobility using SIP for real time multimedia communication" présenté à la conférence MobiWAC'O4 et dont les auteurs sont Wooseong Kim, Myungchul Kim, Chansu Yu et Ben Lee Cette anticipation permet certes de réduire le temps de latence mais pas d'améliorer la qualité de service pour la ou les application(s) en cours d'exécution, par exemple par une augmentation du débit offert, car le noeud destinataire n'implémente pas les couches hautes et ne dispose pas de l'ensemble des configurations applicatives possibles pour la mise en oeuvre du service avec l'entité communicante distante. Ces informations de configurations applicatives possibles peuvent exister dans certains noeuds intermédiaires, par exemple dans une architecture de type IMS ("IP Multimedia Subsystem"), mais nécessite la mise en oeuvre de messages de signalisation supplémentaires.

L'invention propose donc un procédé de commutation d'un noeud d'accès origine vers un noeud d'accès destinataire d'un terminal apte à mettre en oeuvre au moins un service au travers d'un réseau à commutation de paquet, le terminal, connecté au noeud d'accès origine, étant associé à un premier contexte de communication et à un ensemble d'au moins une configuration applicative possible pour la mise en oeuvre du service considéré.

Le procédé comporte:
- une étape de découverte d'au moins un noeud d'accès destinataire potentiel, au cours de laquelle
   - le noeud d'accès origine envoie audit au moins un noeud d'accès destinataire potentiel un message de demande de ressources indiquant ledit ensemble de configurations applicatives possibles,
   - le noeud d'accès origine reçoit en réponse, dudit au moins un noeud destinataire potentiel au moins une configuration applicative, parmi l'ensemble des configurations applicatives possibles indiquées, pour laquelle des ressources peuvent être fournies,
- une étape de sélection par le noeud d'accès origine de l'un desdits au moins un noeud destinataire potentiel,
- une étape de transfert du premier contexte de communication du terminal du noeud d'accès origine au noeud d'accès destinataire sélectionné.

Par définition, un contexte de communication contient
- des paramètres relatifs à des couches dites "basses" et
- des paramètres relatifs à des couches dites "hautes" définissant une configuration applicative donnée,
   les couches étant définies par un modèle de communication.
   Selon l'invention, c'est le noeud d'accès d'origine qui
- d'une part, stocke une pluralité de configurations applicatives possibles et le contexte de communication du mobile, pour la mise en oeuvre du service considéré avec l'entité communicante, le contexte de communication contenant non seulement des paramètres relatifs aux couches basses mais également le contexte applicatif du terminal, et
- d'autre part, gère et contrôle la commutation, c'est-à-dire le changement de noeud d'accès.

Grâce à cela, le temps de latence est fortement réduit. En outre, le procédé permet de choisir le noeud d'accès destinataire qui propose une configuration applicative plus adéquate selon l'ensemble de configurations possibles pour la mise en oeuvre du service considéré avec l'entité communicante qui lui ont été communiquées. Le noeud destinataire détermine la configuration applicative adéquate en se basant sur ses ressources disponibles et sa politique d'allocation de ressources afin d'offrir la qualité de service la mieux adaptée. Grâce à cela, il est même possible d'améliorer la qualité de service, notamment par une augmentation du débit alloué ou par ajout d'un média en passant par exemple d'une application voix à une application de visiophonie, durant la mise en oeuvre du service considéré, sans interruption de celui-ci, du fait de la commutation de noeud d'accès.

On notera que la solution de l'invention est particulièrement avantageuse par rapport au procédé de commutation tel que par exemple décrit dans le document de brevet WO 03/092314. En effet, selon ce document, un tel procédé de commutation est mis en oeuvre dans le terminal, ou déporté dans un équipement du réseau dénommé proxy.

Selon un aspect de l'invention, la sélection d'un noeud d'accès destinataire par le noeud d'accès origine, ainsi que la gestion de la connexion et du contrôle de la commutation, permet de réduire les échanges d'information entre les noeuds d'accès origine et destinataires avec le terminal. On limite ainsi les sollicitations au terminal par rapport au procédé de commutation mis en oeuvre dans le terminal décrit dans le document précité.

En outre, la mise en oeuvre du procédé de commutation dans un proxy décrite dans le document précité induit, par rapport à la solution de l'invention, une forte augmentation du temps de latence.

Après l'étape de transfert, le noeud d'accès origine reçoit du noeud d'accès destinataire sélectionné au moins un paramètre relatif à un deuxième contexte de communication du terminal.

Ainsi, le noeud d'accès origine peut gérer la commutation de noeud d'accès en transparence vis-à-vis de noeuds intermédiaires entre le terminal et l'entité communicante.

Le procédé comprend en outre une étape de notification par le noeud d'accès origine à destination d'une entité communicante distante (EC) d'au moins un paramètre reçu du noeud destinataire sélectionné.

L'entité communicante est alors apte à émettre et recevoir des paquets de données du noeud d'accès destinataire sélectionné. Cette anticipation de commutation de noeud d'accès vis-à-vis de l'entité communicante permet ainsi d'assurer une continuité de service en réduisant les temps de latence.

Le procédé comprend d'autre part une étape de notification par le noeud d'accès origine à destination du terminal d'au moins un paramètre reçu du noeud destinataire sélectionné.

Le terminal peut alors reconfigurer les paramètres relatifs au deuxième contexte de communication et apte à s'identifier auprès de noeud destinataire sélectionné.

Le procédé de commutation dans lequel le modèle de communication utilisé est le modèle de référence OSI est basé sur les couches dites "basses" comprennent la couche liaison de données, la couche réseau et les couches dites "hautes" comprennent la couche transport, la couche session, la couche présentation et la couche application. La sous étape de notification de paramètres relatifs au deuxième contexte de communication par le noeud d'accès origine à destination de l'entité communicante utilise un protocole de l'une des couches hautes.

L'invention concerne également un dispositif de commutation pour un noeud d'accès, dit "noeud d'accès origine", apte à assurer le contrôle d'une connexion d'un terminal apte à mettre au moins un service au travers d'un réseau à commutation de paquet, le terminal étant associé, lorsqu'il est connecté au noeud d'accès origine, à un premier contexte de communication et à un ensemble d'au moins une configuration applicative possible, pour la mise en oeuvre du service considéré. Le dispositif comporte:
- des moyens de découverte d'au moins un noeud d'accès destinataire potentiel adapté pour:
   - envoyer audit au moins un noeud d'accès destinataire potentiel un message de demande de ressources indiquant ledit ensemble de configurations applicatives possibles,
   - recevoir en réponse au moins une configuration applicative dudit au moins un noeud destinataire potentiel, parmi l'ensemble des configurations applicatives possibles indiquées, pour laquelle des ressources peuvent être fournies
- des moyens de sélection de l'un desdits au moins un noeud destinataire potentiel,
- des moyens pour commander un transfert du premier contexte de communication du terminal audit noeud d'accès destinataire sélectionné.

L'invention concerne également un dispositif de commutation pour un noeud d'accès, dit "noeud d'accès destinataire", apte à recevoir, suite à une commutation de noeud d'accès, le contrôle d'une connexion d'un terminal apte à mettre en oeuvre au moins un service au travers d'un réseau à commutation de paquet, le terminal étant associé, lorsqu'il est connecté au noeud d'accès origine, à un premier contexte de communication et à un ensemble d'au moins une configuration applicative possible, pour la mise en oeuvre du service considéré. Le dispositif comporte:
- des moyens pour, en réponse à un message de demande de ressources indiquant ledit ensemble d'au moins une configuration applicative possible, indiquer au noeud d'accès origine au moins une configuration applicative, parmi l'ensemble des configurations possibles indiquées, pour laquelle des ressources peuvent être fournies;
- des moyens pour recevoir un premier contexte de communication du terminal.

L'invention concerne également un noeud d'accès connecté à un réseau à commutation de paquet comportant au moins l'un des deux dispositifs de commutation de noeud d'accès selon l'invention.

L'invention concerne également un système comprenant une pluralité de noeuds d'accès selon l'invention connectés à un réseau à commutation de paquet.

L'invention concerne également un programme d'ordinateur comportant des instructions pour la mise en oeuvre du procédé lorsque ce programme est exécuté par un processeur.

L'invention concerne également un programme d'ordinateur pour un noeud d'accès, dit "noeud d'accès destinataire", comprenant des instructions de programme pour
- indiquer à un noeud d'accès origine, en réponse à un message de demande de ressources indiquant un ensemble d'au moins une configuration applicative possible, au moins une configuration applicative, parmi l'ensemble des configurations possibles indiquées, pour laquelle des ressources peuvent être fournies,
- recevoir un premier contexte de communication d'un terminal,
lorsque ledit programme est exécuté par ledit noeud d'accès destinataire.

L'invention sera mieux comprise à l'aide de la description suivante d'un mode de réalisation particulier du procédé de commutation de noeud d'accès, en référence aux dessins annexés qui en illustrent un exemple de réalisation dépourvu de tout caractère limitatif:
- la figure 1 représente une architecture de réseau comportant des noeuds d'accès selon l'invention,
- la figure 2 représente un procédé de commutation de noeud d'accès selon l'invention,
- la figure 3 représente un schéma bloc fonctionnel d'un noeud d'accès origine selon l'invention,
- la figure 4 représente un schéma bloc fonctionnel d'un noeud d'accès destinataire selon l'invention.

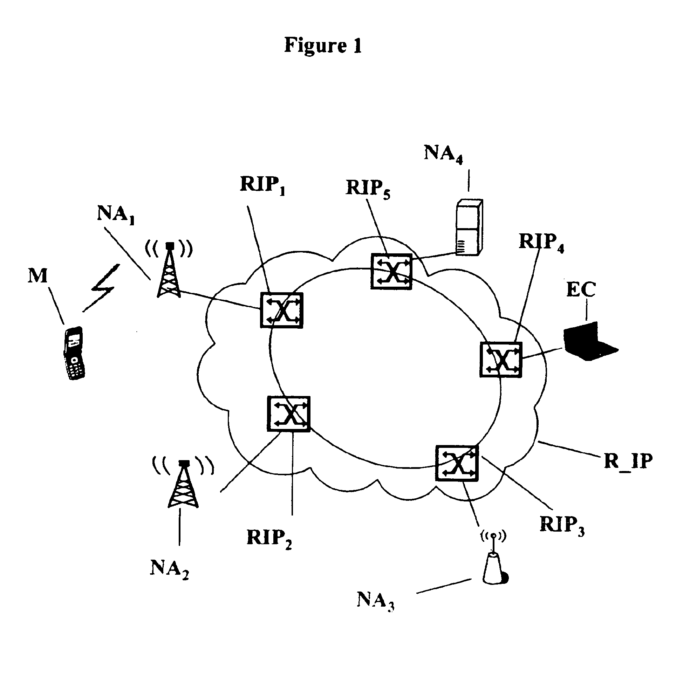

La **figure 1** représente une architecture de réseau de télécommunication pour la mise en relation d'un terminal M connecté à un noeud d'accès NA₁ et d'une entité communicante EC connectée à un réseau à commutation de paquet R_IP, l'entité communicante EC offrant un service au terminal M au travers du réseau à commutation de paquet. Par souci de clarté, une seule entité communicante est représentée sur la figure mais bien évidemment il pourrait y en avoir plusieurs.

Le réseau de communication comporte une pluralité de noeuds d'accès. Les noeuds d'accès peuvent appartenir à un même réseau d'accès ou à différents réseaux d'accès. Pour des raisons de clarté, les réseaux d'accès ne sont pas représentés sur la figure 1. A titre d'exemple illustratif, non limitatif, sur la figure 1, le noeud d'accès NA₂ correspond à une station de base d'un réseau mobile cellulaire de type UMTS, le noeud d'accès NA₃ correspond à un point d'accès à un réseau sans fil de type WiMAX, le noeud NA₄ correspond à un point d'accès à un réseau filaire de type MATH.

Les différents noeuds d'accès et l'entité communicante sont connectés au réseau à commutation de paquets, par exemple par des routeurs IP (RIP₁, RIP₂, RIP₃, RIP₄, RIP₅). L'entité communicante est par exemple un serveur d'application relié au réseau à commutation de paquet, ou bien encore un terminal mobile distant connecté à un réseau d'accès par un noeud d'accès.

Dans un système basé sur le modèle de communication OSI, le terminal M connecté au noeud d'accès NA₁ et l'entité communicante intègrent les trois premières couches, numérotées de un à trois, dites "couches basses", (physique, liaison de données, réseau relatives à la mise en oeuvre de la connexion et au transport des données, et les quatre couches suivantes, numérotées de quatre à sept, dites "couches hautes", (transport, session, présentation, application) responsables du traitement des données permettant l'exécution d'applications pour la mise en oeuvre d'un service offert par l'entité communicante au travers du réseau à commutation de paquet R_IP.

Les noeuds d'accès selon l'invention, intègrent également les couches hautes et les couches basses du modèle OSI, et sont aptes à mettre en oeuvre une fonction d'adaptation des messages des couches un à sept échangés entre le terminal M et l'entité communicante EC.

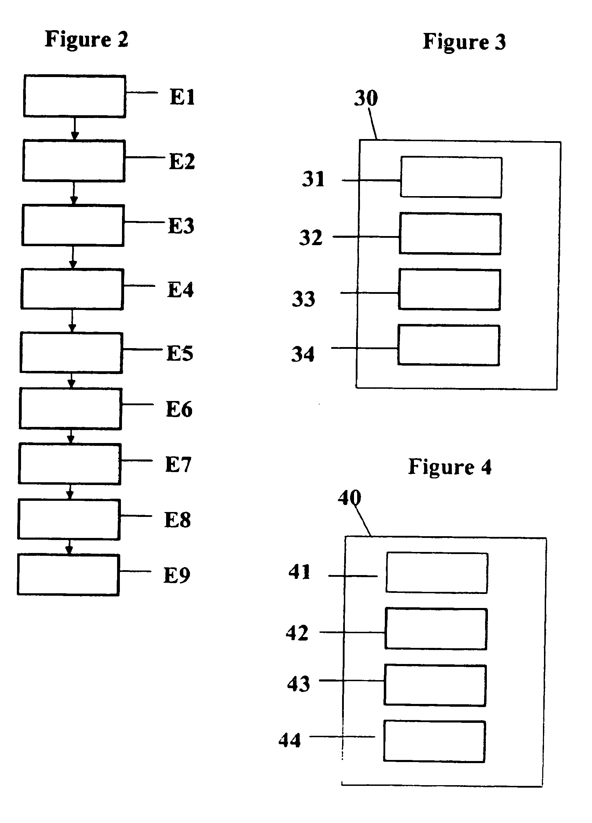

Un exemple particulier de mise en oeuvre du procédé de commutation de noeud d'accès d'un terminal en communication avec une entité communicante au travers d'un réseau à commutation de paquet représenté en figure 1 va maintenant être décrit en référence à la **figure 2**.

Initialement, le terminal est connecté, ou attaché, à un noeud d'accès origine et met en oeuvre un service avec une entité communicante distante à travers le réseau à commutation de paquet. Pour la mise en oeuvre du service, le terminal exécute une ou plusieurs applications.

Le terminal, connecté au noeud d'accès origine et en cours de mise en oeuvre du service considéré, est associé à un premier contexte de communication et à un ensemble de configurations applicatives possibles pour la mise en oeuvre du service considéré. Par définition, un contexte de communication contient
- des paramètres relatifs aux couches "basses" du modèle OSI et
- des paramètres relatifs aux couches "hautes" du modèle OSI définissant une configuration applicative donnée.

Par définition, on appelle "contexte applicatif', l'ensemble des paramètres relatifs aux couches hautes du contexte de communication. Un sous ensemble de paramètres du contexte applicatif définit une configuration applicative donnée pour le service mis en oeuvre entre le terminal et l'entité communicante distante. Ces paramètres sont par exemple le type de service, le débit, le type de codeur/décodeur activé pour le service considéré mis en oeuvre au travers du noeud d'accès origine.

Le procédé comprend une première étape E1 d'identification par le noeud d'accès origine de noeuds d'accès destinataires potentiels vers lesquels le terminal est susceptible de commuter au cours de la mise en oeuvre du service considéré. Cette étape E1 est mise en oeuvre sur réception par le noeud d'accès origine d'informations représentatives de la qualité des canaux de communication entre le terminal et le noeud d'accès origine ainsi que des canaux entre le terminal et des noeuds d'accès voisins géographiquement. Ces informations sont relatives par exemple aux couches un et deux du modèle OSI. Il s'agit, à titre indicatif et non limitatif, du niveau de puissance reçue par le terminal ou en encore d'un taux d'erreur binaire mesuré. A partir des informations reçues, le noeud d'accès origine établit une liste de noeuds d'accès destinataires potentiels. Cette liste comprend ainsi les noeuds voisins pour lesquels au moins une information relative aux couches un ou deux est disponible.

En variante, le noeud d'accès origine sélectionne, dans la liste de noeuds voisins pour lesquels au moins une information relative aux couches un ou deux est disponible, un sous ensemble de noeuds d'accès destinataires dont la qualité des canaux est satisfaisante, par exemple les noeuds d'accès pour lequel le niveau de puissance est supérieur à un seuil donné.

A partir des informations reçues lors de l'étape E1, le noeud d'accès origine détermine, dans une étape E2, les caractéristiques de couche réseau des noeuds d'accès destinataires potentiels, par exemple les adresses IP des noeuds destinataires mémorisées au préalable dans le noeud d'accès d'origine ou délivrées au noeud d'accès par un équipement du réseau d'accès selon l'architecture du réseau d'accès. Le noeud d'accès origine transmet alors à l'ensemble des noeuds d'accès potentiels un message de demande de ressources indiquant un ensemble de configurations applicatives possibles pour la mise en oeuvre du service considéré. Par exemple, les informations transmises lors de cette étape E2 comprennent les différents débits possibles, les codeurs/décodeurs possibles, le nombre et le type de médias supportés tels que la voix sur IP ou la visioconférence.

Dans une étape E3, en réponse au message de demande de ressources, les noeuds destinataires potentiels spécifient au noeud origine au moins une configuration applicative, parmi l'ensemble des configurations applicatives possibles, pour laquelle des ressources peuvent être fournies Plus précisément, un noeud destinataire donné indique par exemple le débit, le codeur/décodeur ou le type de média pour lesquels des ressources sont disponibles afin de poursuivre la mise en oeuvre du service entre le terminal et l'entité communicante distante.

A partir des informations reçues à l'étape E3, combinées ou non avec les informations de qualité des canaux de communication obtenues préalablement à l'étape E1 à partir du terminal, le noeud d'accès origine dans une étape E4 sélectionne un noeud d'accès destinataire et décide de l'opportunité d'effectuer une commutation de noeud d'accès vers ce noeud d'accès destinataire sélectionné. La sélection du noeud destinataire est avantageusement obtenue par application d'un critère visant à améliorer la qualité de service perçue par l'utilisateur du terminal en mobilité en proposant une configuration applicative mieux adapté au service en cours avec l'entité communicante avec par exemple une augmentation du débit offert ou une augmentation du nombre de média offert en passant par exemple d'une application voix à une application de visiophonie.

Dans le cas d'une décision de commutation de noeud d'accès, lors d'une étape E5, le noeud d'accès origine transfère au noeud destinataire sélectionné l'ensemble des configurations applicatives possibles de l'application ainsi que le premier contexte de communication du terminal décrivant les informations des couches un à sept du modèle OSI, c'est-à-dire le contexte de communication courant du terminal connecté au noeud d'accès origine pour la mise en oeuvre du service. A titre d'exemple illustratif, le transfert de contexte de communication peut s'effectuer par utilisation par exemple du protocole CXTP (pour "Context Transfer Protocol" en anglais).

L'ensemble des configurations possibles de l'application, transmises au noeud d'accès destinataire sélectionné, sont mémorisées par celui-ci en vue d'une prochaine commutation du terminal.

En variante, le noeud d'accès origine, lors de l'étape E5, ne transmet que le premier contexte de communication du terminal, le noeud d'accès destinataire mémorisant alors l'ensemble des configurations applicatives possibles communiquées par le noeud origine lors de l'étape E2.

Le noeud d'accès destinataire sélectionné acquitte le transfert du premier contexte de communication du terminal. Il détermine ensuite un deuxième contexte de communication pour le terminal. Il s'agit du nouveau contexte de communication, modifié par rapport au premier et destiné à être utilisé par le terminal une fois connecté au noeud destinataire sélectionné pour la commutation (ou handover). Ensuite, lors d'une étape E6, le noeud destinataire sélectionné transmet au noeud origine des paramètres relatifs au deuxième contexte de communication du terminal. Ce deuxième contexte de communication contient par exemple une nouvelle adresse IP du terminal relative à la connexion de celui-ci au noeud d'accès sélectionné, et une nouvelle configuration applicative définissant un nouveau débit et/ou un nouveau codeur/décodeur pour lesquels des ressources sont garanties par le noeud d'accès destinataire sélectionné Ce nouveau contexte de communication peut contenir également les informations des couches 1 et 2 pour permettre au terminal de se configurer vers le noeud d'accès destination. Le noeud destinataire sélectionné transmet ainsi au noeud origine tous les paramètres relatifs au deuxième contexte de communication du terminal ou bien seulement les paramètres ayant été modifiés par rapport au premier contexte de communication

En variante, le noeud d'accès destinataire transmet un sous ensemble de paramètres du nouveau contexte communication exclusivement nécessaires pour établir la connexion entre le terminal et l'entité communicante au travers de ce noeud d'accès sélectionné.

Le noeud d'accès origine exécute alors lors d'une étape E7 la commutation de noeud d'accès vis à vis de l'entité communicante. Lors de cette étape E7, il notifie à l'entité communicante distante des paramètres relatifs aux couches hautes (c'est-à-dire les couches quatre à sept du modèle OSI) et à la couche réseau (c'est-à-dire la couche trois du modèle OSI) du deuxième contexte de communication. L'entité communicante peut dès lors émettre des paquets de données au noeud d'accès destinataire selon la configuration applicative définie dans le deuxième contexte de communication. La commutation de noeud d'accès vis-à-vis de l'entité communicante distante est gérée par le noeud d'accès origine. Celui-ci utilise un protocole de niveau supérieur au égal à quatre permettant l'établissement d'une nouvelle session avec l'entité communicante distante, tel par exemple le protocole SIP (pour "Session Initiative Protocol" en anglais) . A titre d'exemple illustratif basé sur le protocole SIP, la fonction B2BUA (pour "Back-to-back User Agent" en anglais), fonction d'adaptation des messages des couches un à sept du modèle OSI, permet d'informer l'entité communicante d'une modification d'adresse IP et de la nouvelle configuration applicative. L'entité communicante est ainsi informée du changement de noeud d'accès et met à jour les informations des couches trois à sept du modèle OSI, par exemple la nouvelle adresse IP du terminal afin de transmettre et recevoir les paquets de couche réseau échangés avec le terminal selon ces nouveaux paramètres.

Lors d'une étape E8, après réception d'un acquittement émis par l'entité communicante confirmant la prise en compte du nouveau (ou deuxième) contexte de communication, le noeud d'accès origine informe le terminal qu'une procédure de commutation de noeud d'accès est en cours d'exécution. Il transmet également au terminal les informations relatives aux couches un à sept du nouveau contexte de communication, requises pour permettre au terminal de se connecter au noeud d'accès destinataire sélectionné. Ces informations comprennent notamment la nouvelle adresse IP du terminal communiquée par le noeud destinataire au noeud d'origine au cours de l'étape E6, les informations concernant les couches 1 et 2 pour permettre de préparer son attachement au noeud d'accès destination, des informations concernant les couches hautes telles que la nouvelle configuration applicative.

Dans un mode particulier de mise en oeuvre du procédé l'étape E7 de notification par le noeud d'accès origine à destination de l'entité communicante et l'étape E8 de notification par le noeud d'accès origine à destination du terminal s'effectuent simultanément afin d'accélérer le procédé de commutation de noeud d'accès.

Lors d'une étape E9, le terminal se connecte au noeud d'accès destinataire sélectionné, après avoir reconfiguré les paramètres correspondant à toutes les couches du modèle de communication. Le terminal est ainsi apte à s'identifier auprès du noeud d'accès destinataire, ce dernier activant une session permettant de transmettre les données en provenance ou à destination de l'entité communicante.

Un exemple particulier de mise en oeuvre du procédé de commutation de noeud d'accès d'un terminal en communication avec une pluralité d'entités communicantes au travers d'un réseau à commutation de paquet va maintenant être décrit.

Initialement, le terminal est connecté, ou attaché, à un noeud d'accès origine et met en oeuvre une pluralité de services avec des entités communicantes distantes à travers le réseau à commutation de paquet. Le terminal, connecté au noeud d'accès origine et en cours de mise en oeuvre des services considérés, est associé à un une pluralité de premiers contextes de communication et une pluralité d'ensembles de configurations applicatives possibles. Chaque premier contexte de communication définit une configuration applicative donnée pour un service entre le terminal et une entité communicante distante.

Les étapes du procédé précédemment décrites sont adaptées afin d'effectuer un changement de noeud d'accès du terminal après spécification par les noeuds d'accès potentiels de toutes les configurations applicatives pour la mise en oeuvre de la pluralité de services avec les entités communicantes distantes. Notamment, en fonction des réponses des noeuds d'accès destinataires vis-à-vis des premiers contextes de communication, le noeud d'accès origine sélectionne un seul noeud destinataire pour tous les services en cours avec les entités communicantes distantes.

En particulier, lors de l'étape E7, le noeud d'accès origine exécute la commutation de noeud d'accès vis à vis de toutes les entités communicantes. Lors de cette étape E7, il notifie à chaque entité communicante distante des paramètres relatifs aux couches hautes (c'est-à-dire les couches quatre à sept du modèle OSI) et à la couche réseau (c'est-à-dire la couche trois du modèle OSI) d'un deuxième contexte de communication pour la mise en oeuvre du service entre le terminal et l'entité communicante considérée.

Un noeud d'accès origine selon l'invention est maintenant décrit en référence à la **figure 3**, sur laquelle, par souci de clarté, seuls les éléments du noeud d'accès liés à l'invention sont représentés.

Le noeud d'accès origine est apte à assurer le contrôle d'une connexion d'un terminal en cours de mise en oeuvre d'au moins un service avec au moins une entité communicante distante à travers un réseau à commutation de paquet. On rappelle que, lorsqu'il est connecté au noeud d'accès origine, le terminal est associé à un premier contexte de communication et à un ensemble de configurations applicatives possibles pour la mise en oeuvre du service considéré.

Le noeud d'accès origine comprend un dispositif 30 de commutation de noeud d'accès apte à assurer le changement de noeud d'accès d'un terminal en communication avec une entité communicante au travers d'un réseau à commutation de paquet pour la mise en oeuvre d'un service. Ce dispositif 30 est adapté pour mettre en oeuvre ou commande la mise en oeuvre celles des étapes du procédé précédemment décrit exécutées par le noeud d'accès origine. Plus précisément, le module 30 comprend les éléments suivants:
- une brique 31 de découverte de noeud d'accès destinataires potentiels,
- une brique 32 de sélection de l'un des noeuds destinataires potentiels,
- une brique 33 de modification du contexte de communication courant du terminal,
- une brique 34 de mémorisation.

La brique 31 de découverte de noeuds d'accès destinataires potentiels est agencée pour
- envoyer aux noeuds d'accès destinataires potentiels un message de demande de ressources indiquant l'ensemble de configurations applicatives possibles pour la mise en oeuvre du service considéré par le terminal,
- recevoir en réponse au moins une configuration applicative spécifiée par les noeuds destinataires potentiels, parmi l'ensemble des configurations applicatives possibles indiquées, pour laquelle des ressources peuvent être fournies

On rappelle que la configuration applicative est définie à partir de paramètres des couches hautes du modèle OSI Il définit par exemple le type de média, le type de codeur/décodeur ou le débit.

La brique 32 de sélection de l'un des noeuds destinataires potentiels, est agencée pour décider d'un changement de noeud d'accès pour le terminal en cours de mise en oeuvre du service considéré avec l'entité communicante et de sélectionner un noeud destinataire parmi un ensemble de noeuds destinataires potentiels. La sélection détermine ici le noeud d'accès offrant une configuration applicative la mieux adaptée au service.

La brique 33 de commande d'une modification du contexte de communication courant du terminal est agencée pour commander une mise à jour du contexte de communication du terminal en vue de sa commutation vers le noeud d'accès destinataire potentiel. La brique 33 est agencée pour:
- commander un transfert du premier contexte de communication du terminal (c'est-à-dire le contexte de communication du terminal lorsqu'il est connecté au noeud d'accès origine et en cours de mise en oeuvre du service) au noeud d'accès destinataire sélectionné,
- recevoir en provenance du noeud destinataire sélectionné des paramètres d'un deuxième contexte de communication du terminal (c'est-à-dire celui destiné à être utilisé par le terminal après commutation),
- notifier au terminal les paramètres relatifs au deuxième contexte de communication,
- notifier à l'entité communicante distante les paramètres relatifs au deuxième contexte de communication.

La brique 33 est de plus agencée pour notifier le terminal du nouveau contexte de communication.

La brique 34 de mémorisation est agencée pour mémoriser l'ensemble les configurations applicatives possibles associées à un terminal pour la mise en oeuvre d'un service offert par une entité communicante distante au travers d'un réseau à commutation de paquets.

Un noeud d'accès destinataire selon l'invention est maintenant décrit en référence à la **figure 4**, sur laquelle, par souci de clarté, seuls les éléments du noeud d'accès liés à l'invention sont explicités.

Le noeud d'accès destinataire comprend un dispositif 40 de commutation de noeud d'accès. Ce noeud destinataire est apte à recevoir, suite à une commutation de noeud d'accès, le contrôle d'une connexion d'un terminal en cours de mise en oeuvre d'au moins un service avec au moins une entité communicante distante à travers un réseau à commutation de paquet. Le dispositif 40 est apte à mettre en oeuvre celles des étapes du procédé exécutées par le noeud destinataire potentiel sélectionné. Plus précisément, le dispositif 40 comprend les éléments suivants:
- une brique d'émission 41 adaptée pour, en réponse à un message de demande de ressources indiquant un ensemble de configurations applicatives possibles pour la mise en oeuvre du service considéré par le terminal, spécifier au moins une configuration applicative, parmi l'ensemble des configurations applicatives indiquées, pour laquelle des ressources peuvent être fournies ;
- une brique 42 de réception d'un premier contexte de communication en provenance du noeud d'accès origine,
- une brique 43 de détermination d'un deuxième (ou nouveau) contexte de communication du terminal,
- une brique 44 adaptée pour transmettre au noeud d'accès origine des paramètres du deuxième contexte de communication du terminal déterminé.

L'invention décrite ici concerne un dispositif de changement de noeud d'accès mise en oeuvre dans le module 30 ainsi que dans le module 40. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement d'informations peut être n'importe quelle entité ou dispositif capable de stocker le programme. Par exemple, le support peut comporter un moyen de stockage ou support d'enregistrement sur lequel est stocké le programme d'ordinateur selon l'invention, tel que, mais non limité à, une ROM, par exemple un CD ROM ou une ROM de circuit microélectronique, ou encore une clé USB, ou un moyen d'enregistrement magnétique, par exemple une disquette (floppy disc) ou un disque dur, ou une carte à puce.

## Revendications

1. Procédé de commutation d'un noeud d'accès origine (NA₁) vers un noeud d'accès destinataire (NA₂, NA₃, NA₄) d'un terminal apte à mettre en oeuvre au moins un service avec une entité communicante distante (EC) au travers d'un réseau à commutation de paquet (R_IP), ledit terminal, connecté au noeud d'accès origine, étant associé à un premier contexte de communication et à un ensemble d'au moins une configuration applicative possible pour la mise en oeuvre du service considéré,
procédé comportant:
- une étape de découverte (E2, E3) d'au moins un noeud d'accès destinataire potentiel, au cours de laquelle
• le noeud d'accès origine envoie audit au moins un noeud d'accès destinataire potentiel un message de demande de ressources indiquant ledit ensemble de configurations applicatives possibles,
• le noeud d'accès origine reçoit, en réponse, dudit au moins un noeud destinataire potentiel au moins une configuration applicative, parmi l'ensemble des configurations applicatives possibles indiquées, pour laquelle des ressources peuvent être fournies,
- une étape de sélection (E4) par le noeud d'accès origine de l'un desdits au moins un noeud destinataire potentiel,
- une étape de transfert (E5) du premier contexte de communication du terminal du noeud d'accès origine au noeud d'accès destinataire sélectionné,
procédé dans lequel, après l'étape de transfert, le noeud d'accès origine reçoit du noeud d'accès destinataire sélectionné au moins un paramètre relatif à un deuxième contexte de communication du terminal
et comprenant une étape (E7) de notification par le noeud d'accès origine à destination de l'entité communicante distante (EC) d'au moins un paramètre reçu du noeud destinataire sélectionné.

2. Procédé selon la revendication 1, comprenant une étape (E8) de notification par le noeud d'accès origine à destination du terminal d'au moins un paramètre reçu du noeud destinataire sélectionné.

3. Dispositif de commutation pour un noeud d'accès (NA₁), dit "noeud d'accès origine", apte à assurer le contrôle d'une connexion d'un terminal (M) apte à mettre en oeuvre au moins un service avec une entité communicante distante (EC) au travers d'un réseau à commutation de paquet (R_IP), ledit terminal étant associé, lorsqu'il est connecté au noeud d'accès origine, à un premier contexte de communication et à un ensemble d'au moins une configuration applicative possible, pour la mise en oeuvre du service considéré, ledit dispositif comportant :
- des moyens de découverte d'au moins un noeud d'accès destinataire potentiel adapté pour :
• envoyer audit au moins un noeud d'accès destinataire potentiel un message de demande de ressources indiquant ledit ensemble de configurations applicatives possibles,
• recevoir en réponse au moins une configuration applicative dudit au moins un noeud destinataire potentiel, parmi l'ensemble des configurations applicatives possibles indiquées, pour laquelle des ressources peuvent être fournies,
- des moyens de sélection de l'un desdits au moins un noeud destinataire potentiel,
- des moyens pour commander un transfert du premier contexte de communication du terminal audit noeud d'accès destinataire sélectionné,
- des moyens pour recevoir, en provenance du noeud destinataire sélectionné, des paramètres d'un deuxième contexte de communication du terminal,
- des moyens pour notifier à l'entité communicante distante les paramètres relatifs au deuxième contexte de communication.

4. Dispositif de commutation pour un noeud d'accès (NA₁) selon la revendication 3 comprenant en outre des moyens pour notifier au terminal les paramètres relatifs au deuxième contexte de communication.

5. Noeud d'accès (NA₁, NA₂, NA₃, NA₄) connecté à un réseau à commutation de paquet (R_IP) comportant au moins un dispositifs selon l'une des revendications 3 et 4.

6. Système comprenant une pluralité de noeuds d'accès (NA₁, NA₂, NA₃, NA₄) selon la revendication 5 connectés à un réseau à commutation de paquet (R_IP).

7. Programme d'ordinateur comportant des instructions pour la mise en oeuvre du procédé selon la revendication 1, lorsque ce programme est exécuté par un processeur.

## Claims

1. Method for switching a terminal capable of implementing at least one service with a remote communicating entity (EC) through a packet-switched network (R_IP) from an origin access node (NA₁) to a destination access node (NA₂, NA₃, NA₄), said terminal, connected to the origin access node, being associated with a first communication context and with a set of at least one possible application configuration for implementing the service concerned,
method comprising:
- a step for discovery (E2, E3) of at least one potential destination access node, during which
• the origin access node sends to said at least one potential destination access node a resource request message indicating said set of possible application configurations,
• the origin access node receives, in response, from said at least one potential destination node, at least one application configuration, out of the set of possible application configurations indicated, for which resources can be provided,
- a step for selection (E4) by the origin access node of one of said at least one potential destination nodes,
- a step for transfer (E5) of the first communication context of the terminal from the origin access node to the selected destination access node,
method in which, after the transfer step, the origin access node receives from the selected destination access node at least one parameter relating to a second communication context of the terminal
and comprising a step (E7) for notification by the origin access node to the remote communicating entity (EC) of at least one parameter received from the selected destination node.

2. Method according to Claim 1, comprising a step (E8) for notification by the origin access node to the terminal of at least one parameter received from the selected destination node.

3. Switching device for an access node (NA₁), called "origin access node", capable of controlling a connection of a terminal (M) capable of implementing at least one service with a remote communicating entity (EC) through a packet-switched network (R_IP), said terminal being associated, when it is connected to the origin access node, with a first communication context and with a set of at least one possible application configuration, for implementing the service concerned, said device comprising:
- means for discovery of at least one potential destination access node suitable for:
• sending to said at least one potential destination access node a resource request message indicating said set of possible application configurations,
• receiving, in response, at least one application configuration from said at least one potential destination node, out of the set of possible application configurations indicated, for which resources can be provided,
- means for selecting one of said at least one potential destination nodes,
- means for ordering a transfer of the first communication context from the terminal to said selected destination access node,
- means for receiving, from the selected destination node, parameters of a second communication context of the terminal,
- means for notifying the remote communicating entity of the parameters relating to the second communication context.

4. Switching device for an access node (NA₁) according to Claim 3, also comprising means for notifying the terminal of the parameters relating to the second communication context.

5. Access node (NA₁, NA₂, NA₃, NA₄) connected to a packet-switched network (R_IP) comprising at least one device according to one of Claims 3 and 4.

6. System comprising a plurality of access nodes (NA₁, NA₂, NA₃, NA₄) according to Claim 5 connected to a packet-switched network (R_IP).

7. Computer program comprising instructions for implementing the method according to Claim 1, when this program is executed by a processor.

## Patentansprüche

1. Verfahren zum Umschalten von einem Ursprungszugangsknoten (NA₁) zu einem Zielzugangsknoten (NA₂, NA₃, NA ₄) eines Endgeräts, das mindestens einen Dienst mit einer fernen kommunizierenden Entität (EC) über ein Paketvermittlungsnetz (R_IP) durchführen kann, wobei das Endgerät, das mit dem Ursprungszugangsknoten verbunden ist, einem ersten Kommunikationskontext und einer Einheit von mindestens einer möglichen Anwendungskonfiguration zur Durchführung des betreffenden Diensts zugeordnet ist,
wobei das Verfahren enthält:
- einen Schritt (E2, E3) des Findens mindestens eines potentiellen Zielzugangsknotens, während dem
• der Ursprungszugangsknoten an den mindestens einen potentiellen Zielzugangsknoten eine Anforderungsmitteilung von Ressourcen sendet, die die Einheit von möglichen Anwendungskonfigurationen angibt,
• der Ursprungszugangsknoten als Antwort von dem mindestens einen potentiellen Zielknoten mindestens eine Anwendungskonfiguration aus der Einheit von angegebenen möglichen Anwendungskonfigurationen empfängt, für die Ressourcen geliefert werden können,
- einen Auswahlschritt (E4) durch den Ursprungszugangsknoten eines der mindestens einen möglichen Zielknoten,
- einen Übertragungsschritt (E5) des ersten Kommunikationskontexts des Endgeräts vom Ursprungszugangsknoten zum ausgewählten Zielzugangsknoten,
Verfahren, bei dem nach dem Übertragungsschritt der Ursprungszugangsknoten vom ausgewählten Zielzugangsknoten mindestens einen Parameter bezüglich eines zweiten Kommunikationskontexts des Endgeräts empfängt,
und das einen Schritt (E7) der Mitteilung durch den Ursprungszugangsknoten an die ferne kommunizierende Entität (EC) mindestens eines vom ausgewählten Zielknoten empfangenen Parameters enthält.

2. Verfahren nach Anspruch 1, das einen Schritt (E8) der Mitteilung durch den Ursprungszugangsknoten an das Endgerät mindestens eines vom ausgewählten Zielknoten empfangenen Parameters enthält.

3. Schaltvorrichtung für einen Zugangsknoten (NA₁), "Ursprungszugangsknoten" genannt, die die Steuerung einer Verbindung eines Endgeräts (M) gewährleisten kann, das mindestens einen Dienst mit einer fernen kommunizierenden Entität (EC) über ein Paketvermittlungsnetz (R_IP) durchführen kann, wobei das Endgerät, wenn es mit dem Ursprungszugangsknoten verbunden ist, einem ersten Kommunikationskontext und einer Einheit von mindestens einer möglichen Anwendungskonfiguration zur Durchführung des betreffenden Diensts zugeordnet ist,
wobei die Vorrichtung enthält:
- Einrichtungen zum Finden mindestens eines potentiellen Zielzugangsknotens, die geeignet sind, um:
• an den mindestens einen potentiellen Zielzugangsknoten eine Anforderungsmitteilung von Ressourcen zu senden, die die Einheit von möglichen Anwendungskonfigurationen angibt,
• als Antwort mindestens eine Anwendungskonfiguration von dem mindestens einen möglichen Zielknoten aus der Einheit von angegebenen möglichen Anwendungskonfigurationen zu empfangen, für die Ressourcen geliefert werden können,
- Einrichtungen zur Auswahl eines der mindestens einen potentiellen Zielknoten,
- Einrichtungen zum Steuern einer Übertragung des ersten Kommunikationskontexts vom Endgerät an den ausgewählten Zielzugangsknoten,
- Einrichtungen, um vom ausgewählten Zielknoten Parameter eines zweiten Kommunikationskontexts des Endgeräts zu empfangen,
- Einrichtungen, um der fernen kommunizierenden Entität die Parameter bezüglich des zweiten Kommunikationskontexts mitzuteilen.

4. Schaltvorrichtung für einen Zugangsknoten (NA₁) nach Anspruch 3, die außerdem Einrichtungen enthält, um dem Endgerät die Parameter bezüglich des zweiten Kommunikationskontexts mitzuteilen.

5. Zugangsknoten (NA₁, NA₂, NA₃, NA₄) , der mit einem Paketvermittlungsnetz (R_IP) verbunden ist, das mindestens eine Vorrichtung nach einem der Ansprüche 3 und 4 enthält.

6. System, das eine Vielzahl von Zugangsknoten (NA₁, NA₂, NA₃, NA₄) nach Anspruch 5 enthält, die mit einem Paketvermittlungsnetz (R_IP) verbunden sind.

7. Computerprogramm, das Anweisungen zur Ausführung des Verfahrens nach Anspruch 1 enthält, wenn dieses Programm von einem Prozessor ausgeführt wird.
